# EUROPEAN PATENT SPECIFICATION

(11) **EP 2 919 623 B1**
(45) Date of publication and mention of the grant of the patent: **21.10.2020**
(21) Application number: 13794961.6
(22) Date of filing: 15.11.2013
(51) Int. Cl.: A47F 3/00, A47F 11/10

(54) **LIGHTING UNIT FOR A DISPLAY SHELF**
BELEUCHTUNGSEINHEIT FÜR EINE REGALAUSLAGE
UNITÉ D'ÉCLAIRAGE POUR UN PRÉSENTOIR

(30) Priority: 16.11.2012 EP 12193035; 11.02.2013 EP 13154854
(43) Date of publication of application: 23.09.2015
(73) Proprietor: Diam UK Ltd, Leicestershire LE11 5XS (GB)
(72) Inventor: KERR, Eamonn, Loughborough Leicestershire LE11 5XS (GB); MANSELL, Peter, Loughborough Leicestershire LE11 5XS (GB); ALLEN, Martin, Loughborough Leicestershire LE11 5XS (GB)
(74) Representative: Oxley, Robin John George
(86) International application number: PCT/GB2013/053027
(87) International publication number: WO 2014/076495

(56) References cited:
- WO-A2-2012/085896
- DE-A1- 19 844 657
- DE-U1-202006 004 865
- US-A1- 2005 082 450
- US-B1- 6 361 180

## Description

This invention relates to display shelving, in particular to point of sale display shelving for use in the cosmetics sector.

Display shelves in the retail sector are designed to improve the visual appeal for the customer. This is believed to enhance the product offering for open sale / free access items. Branding is particularly important in the cosmetics sector, where purchase decisions are often made at the point of purchase. Accordingly, it is important to create an as visually striking point of display as possible.

Display stands that have a rigid shelf system equipped with shelf modules for carrying and presenting cosmetics in an ordered fashion are well known in the retail environment. It is also well known for such stands to include graphic panels at their outer edges.

As many cosmetics also trade on their clinical elements displays are preferred to have a very clean look to them and as such good lighting of the products on display is important. However, the use of excessive lighting is not only harmful to the environment in terms of energy consumption but also creates heat which may, over time, soften cosmetic products, particularly those close to the lights. This may be particular problematic with such products as lipsticks and other cosmetics which include waxes and/or oils.

US2005/0082450A1 discloses a modular bracket system for attachment to shelf edges. DE202006004865U1 discloses lighting equipment comprising at least one light source and a light conductive filament in a flat configuration. DE19844657A1 discloses a light controlling laminated flat synthetic resin product. WO2012085896A2 discloses a colour insensitive scattering pigment.

It is the object of the present invention to provide a new lighting unit for a cosmetic display that at assists in mitigating the above mentioned problems with known designs.

According to the invention, there is provided a lighting unit for the front edge of a display shelf, the lighting unit comprising: a transparent or translucent elongate diffuser comprising an elongate upper edge, an elongate lower edge, an elongate front face and an elongate rear face, said diffuser having a light-receiving interface extending substantially in a direction of one of the elongate upper and lower edge; a lighting element comprising a plurality of light emitting diodes attached to a circuit board to form a light strip, wherein the light emitting diodes are oriented to direct light towards the light-receiving interface and through said diffuser in a direction from
one elongate edge towards the other elongate edge; and a substantially transparent elongate cover located over the diffuser and defining a gap therebetween for receiving a display graphic; wherein said diffuser is configured to scatter a portion of the light passing therethrough towards the cover so as to, in use, allow a display graphic in said gap to be backlit; and wherein the lighting unit is configured to direct a portion of the light in a downward direction.

By light-receiving interface, a surface or face of the diffuser is meant, which surface or face is configured to permit at least a portion of the light emitted from the lighting element to enter into the diffuser.

The light-receiving interface may be adjacent to and extending substantially along one of the elongate upper and lower edge. The light-receiving interface may be parallel to the elongate upper and lower edge. It will be understood that the interface will be aligned with the edge to provide a light distribution. If an even illumination is desired, this may be facilitated by a parallel alignment.

The lighting element, e.g. the light emitting diodes, may be positioned from the light-receiving interface at such a distance that at least 10%, 20%, 30%, 40%, 50%, 60%, 70%, 80%, or 90% of the light emitted by the lighting element shines onto the light-receiving interface. In an example, the lighting element is positioned from the light-receiving interface at a distance of at least, or at a distance of no more than, 0.1, 0.2, 0.3, 0.4, 0.5, .6, 0.7, 0.8, 0.9, 1, 2, 3, 4, 5, 10, 15, 20, 25, 30, 35, 40, 45, or 50 mm (millimetres).

The proportion of perpendicularly emitted light, and the proportion of light entering the light-receiving interface, can be influenced by controlling the distance between the lighting element and the light-receiving interface.

The portion of the light is directed by said lighting unit in a downward direction may comprise reflected light.

The diffuser may additionally transmit a portion of the light passing therethrough to be emitted at the elongate upper edge thereof.

The diffuser has a J-section profile comprising a long arm, a short arm, and a bend, wherein the end of the long arm defines one of the upper and lower edge, wherein the bend defines the other of the upper and lower edge, and wherein the end of the short arm provides the light-receiving interface.

When a diffuser having a J-section profile is discussed herein, it will be understood that the end of the short arm is nearer the bend than the end of the long arm. In an example, the long arm and the short arm are parallel. In another example, the angle between the long arm and the short arm is equal to or more than 170° or 175°, or equal to or less than 190° or 185°.

The light-receiving interface may be provided by a recessed channel, wherein the recessed channel is located adjacent one of the elongate upper and lower edge, and wherein said lighting element is located in said recessed channel and the light emitting diodes are oriented to direct light from said recess through said diffuser in a direction from one elongate edge towards the other elongate edge.

It will be understood that in examples with a recessed channel, the light-receiving interface is provided by one or more of the surfaces of the recessed channel.

The invention enables a single light emitting diode (LED) strip light to provide multiple lighting to a product display, for example a cosmetics display. The lighting can provide an illuminated graphic which can include the brand name and an image, can provide down-lighting to products displayed on a shelf below the shelf to which the lighting unit is applied, and can optionally also provide up-lighting to the fronts of products on the shelf to which the lighting unit is applied.

In one example the LEDs may be side emitting LEDs that emit light from one side thereof and the light strip can be arranged near the light-receiving interface, e.g. in the recess, adjacent the elongate lower edge and in an orientation such that the light emitting side of the diodes are directed towards the upper edge. In this case, the up-lighting effect is produced by the light passing through the diffuser and exiting the top edge, the backlighting of the graphic is produced by the diffusion of some of the light as it passes through the diffuser, and the down lighting effect is produced buy a combination of sideways light bleed, refraction and reflection as the light passes emits from the LEDs and passes into the diffuser from the channel. The circuit board of the LEDs is preferably white or reflective and assists in reflecting light in a downwards direction.

One face of the diffuser may be provided with a surface texture to increase the amount of light scattered towards the cover. The surface texture may, for example, comprise a plurality of ridges. The ridges may be triangular, square, curved or another suitable shape. Alternatively, the surface texture may comprise a three dimensional pattern on one face of the diffuser. The pattern may be provided on the rear face of the diffuser. Optionally, a reflective panel or strip, for example silver or white, may be attached to one or both of the elongate rear face and the elongate lower edge of the diffuser to decrease any light loss therethrough. In examples with a diffuser having a J-section profile, a light-shielding strip may be positioned between the lighting element and an arm of the diffuser.

The diffuser may optionally comprise a first material comprising a polymer containing particles of a second transparent or translucent material having a different refractive index than the first material. In this manner, the different refractive indexes assist in the scattering of light as it passes therethrough, which assists in the backlighting of a graphic placed in the gap.

The lighting unit may further comprise a hinge adjacent the elongate upper edge that enables one or both of the diffuser and cover to be pivoted upwards from a display position to a service position. Alternatively, a hinge may be provided adjacent the elongate lower edge to enable one or both of the diffuser and cover to be pivoted downwards from a display position to a service position. A support structure may be provided to which the diffuser and cover are attached by the hinge. With the diffuser and cover in the display position, the support structure may support said diffuser and cover at an incline.

The display position is its normal in use position and the service position is a position it can be moved into for service, for example stock taking and restocking. An information panel may be provided pivotally attached to the lighting display towards a lower edge thereof. The information panel may be pivotal such that in the display position it is located behind the diffuser and is obstructed from view, and in the service position the information panel can be pivoted downwards to present service information to a user. The information panel may include channels therein for receiving paper or card containing printed indicia, for example alphanumeric data, barcodes, QR keys etc, that can be read or scanned by electronic equipment and which relates to the product on the shelf. In one preferred arrangement, the information panel maybe pivotally attached to the rear surface of the diffuser by means of a live hinge, at a position inward of the recess.

In one example, the lighting strip may be attached to, and extend from, the support element in a position such that, when the lighting element is in its display position the lighting strip extends from said support structure into the recessed channel in the diffuser. Alternatively, in another example, the lighting strip may be attached to the diffuser in the recessed channel so that it pivots with the diffuser between the display position and the service position.

The diffuser tapers in a direction from one elongate edge to the other elongate edge in particular. The taper is oriented so that the thickness of the diffuser reduces with distance from the light strip. The front face of the diffuser may be substantially perpendicular to the light strip and the rear face of the diffuser may taper towards the front edge of the diffuser. In this way, some of the light passing through the diffuser in a direction from the light source to the elongate edge spaced therefrom will encounter the rear tapered face, and at least part of the light will be reflected therefrom back into the diffuser towards the front face, to increase the light emitted from that front face.

According to a first example related to, but not part of, the claimed invention, there is provided a shelf tray for displaying products on a shelf, said shelf tray comprising: a support structure comprising a front section having location means for alignment, in use, with the front edge and the top surface of a shelf; and a lighting unit according to the invention attached to said support structure; wherein said lighting unit partially overhangs the front section of the shelf tray. The support structure facilitates aligning one or more trays on the shelves, and the overhang permits the light being emitted downwards to illuminate the top of articles placed on a shelf beneath the lit shelf. The lighting unit can be pivotally attached to the shelf tray, and the shelf tray front section can comprise a lighting unit support structure to support said lighting unit at an incline. The incline
presents the graphic display so as to be easily read by a consumer and also directs the up-lighting in a backwards direction, towards the product on the display shelf.

In one arrangement, the shelf tray further comprises: joining means at either edge thereof for attachment to other shelf trays, bus bar power distribution tracks running substantially along its length for electrical connection with an adjacent shelf tray; and electrical connection means for connecting the lighting element to the bus bar for the supply of electricity thereto. In this manner, a modular shelving system can be provided that also includes an integrated power supply to the lighting units so that they do not each need to be individually connected to a source of electricity, for example by flying leads. In one arrangement, the shelf tray may include a recess therein in which the bus bar is exposed such that, in use, display modules placed on the shelf tray can be located so as to extend into said recess to electrically connect to said bus bars. In a preferred arrangement, accessories may alternatively be powered by a shoe provided to pick up power in the track and transmit the power to the accessory via a flying lead, rather than by direct transmission to any contacts in the accessory body.

According to a second example related to, but not part of, the claimed invention, there is provided a display unit comprising a support structure supporting a plurality of shelves, and a plurality of shelf trays according to the first example of the invention on each said shelf. When used with the shelf trays having the integral bus bar as described above, the display unit may further comprise an end panel attached to the end of at least one of the shelf trays. The end panel may comprise an electrical connector on one face thereof for connection to the bus bar. A further electrical connector can be attached thereto for connection to a source of electricity.

According to a third example, there is provided a shelf for displaying products, said shelf comprising: a substantially horizontal platform and a lighting unit according to the invention; wherein the lighting unit at least partially overhangs the front section of the shelf substantially horizontal platform. It will be appreciated that the substantially horizontal platform may be angled at a slight incline relative to the horizontal, or may be stepped with substantially horizontal areas, such that it is capable of retaining products on display without them sliding forward and of the front of the shelf. The shelf may further comprise a shelf tray to which the support structure of the lighting unit is attached, said shelf tray received on said shelf.

According to a fourth example related to, but not part of, the claimed invention, there is provided a display unit comprising a shelf support structure and a plurality of shelves according to the third example supported by said shelf support structure.

According to a fifth example related to, but not part of, the claimed invention, there is provided a lighting unit for the front edge of a display shelf, the lighting unit comprising a transparent or translucent elongate diffuser comprising an elongate upper edge, an elongate lower edge, an elongate front face and an elongate rear face, said diffuser having a recessed channel adjacent to and substantially extending along one of the elongate upper and lower edge; a lighting element located in said recessed channel, said lighting element comprising a plurality of light emitting diodes attached to a circuit board to form a light strip, wherein the light emitting diodes are oriented to direct light from said recess through said diffuser in a direction from one elongate edge towards the other elongate edge; and a substantially transparent elongate cover located over the diffuser and defining a gap there between for receiving a display graphic; wherein said diffuser scatters a portion of the light passing therethrough towards the cover so as to, in use, back light a display graphic in said gap; and a portion of the light is directed by said lighting unit in a downward direction.

Examples in accordance with the fifth example may comprise features of the previous examples.

According to a sixth example related to, but not part of, the claimed invention, there is provided a lighting unit for the front edge of a display shelf, the lighting unit comprising: a transparent or translucent elongate diffuser comprising an elongate upper edge, an elongate lower edge, an elongate front face and an elongate rear face, said diffuser having a recessed channel adjacent to and substantially extending along one of the elongate upper and lower edge; a lighting element located in said recessed channel, said lighting element comprising a plurality of light emitting diodes attached to a circuit board to form a light strip, wherein the light emitting diodes are oriented to direct light sideways through said diffuser in a direction from one elongate edge towards the other elongate edge; and a substantially transparent elongate cover located over the diffuser and defining a gap there between for receiving a display graphic; wherein said diffuser scatters a portion of the light passing therethrough towards the cover so as to, in use, back light a display graphic in said gap; said diffuser transmits a portion of the light therethrough to be emitted at the elongate upper edge thereof; and a portion of the light is reflected by said lighting unit in a downward direction.

Examples in accordance with the sixth example may comprise features of the previous examples. In examples in accordance with the sixth example, the recessed channel may be located adjacent the elongate lower edge. The light emitting diodes may be side emitting light emitting diodes that emit light from one side thereof and said light strip may be arranged in said recess in an orientation such that the light emitting side of the diodes are directed towards the other of the upper and lower edge.

Examples of the present invention will now be described, by way of example only, with reference to the Figures, in which:
Figure 1 shows an arrangement of display shelves suitable for incorporation of a display shelf according to the third example;
Figure 2 shows a perspective view of a shelf tray arrangement in accordance with a first example;
Figure 3A shows a cross-sectional side view of a shelf tray in accordance with the first example;
Figure 3B shows an enlargement of the lighting unit of Figure 3A;
Figure 4A shows a cross-sectional side view of a shelf tray of Figure 3A, provided on a shelf, the tray being in a service position;
Figure 4B shows an enlargement of the lighting unit of Figure 4A;
Figure 5 shows a perspective view of a shelf tray component of the first example;
Figure 6A shows a perspective view of a shelf tray component of the first example;
Figure 6B shows a cross-section of the shelf tray component of Figure 6A;
Figure 7 shows a perspective view of a shelf tray component of the first example;
Figure 8 shows an exploded view of a shelf according to the third example;
Figure 9 shows a side section view of the shelf;
Figure 10 shows an enlarged view of the front of the shelf of Figure 9 in the display position;
Figure 11 shows an enlarged view of the front of the shelf of Figure 9 in the service position;
Figure 12 is a perspective view of a cover for use with the: shelf;
Figure 13 is a cross-sectional side view of an embodiment of the invention; and
Figure 14 is a cross-sectional side view of a J-profile diffuser indicated in Figure 13.

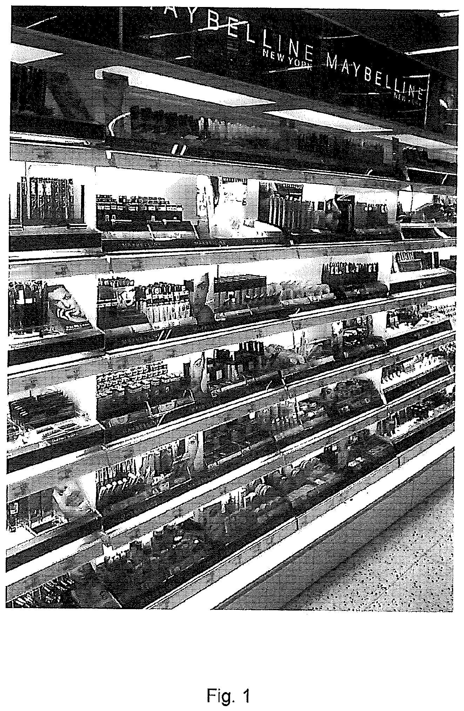

Fig. 1 shows a retail shelving system composed of several display units. A display unit comprises a plurality of wall mounted or panel mounted shelves. A display unit may be provided in different heights depending on the retail environment. The typical maximum height for self access shelving units is within the average customer's arms reach, e.g. about 2 metres high. Shelving units may be smaller, e.g. shoulder high. Several horizontal or inclined shelves are carried on a display unit. The shelves are vertically spaced apart so as to allow an appealing product offering. To maximise shelving space, shelves are provided at ankle and knee level. Illumination systems are provided to improve the visibility of the products.

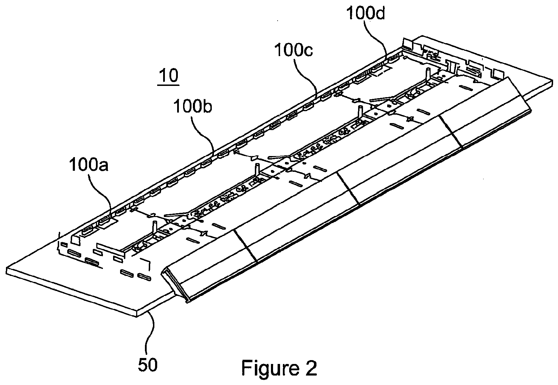

Fig. 2 shows a shelf tray arrangement 10 provided on a shelf 50. Shelf 50 may be a shopfit glass or solid shelf. Shelf 50 may be a horizontal shelf or may be inclined at an angle. Shelf tray arrangement 10 comprises a plurality of individual shelf trays 100 comprising individual shelf tray units 100a, 100b, 100c, 100d, which can be connected to one another.

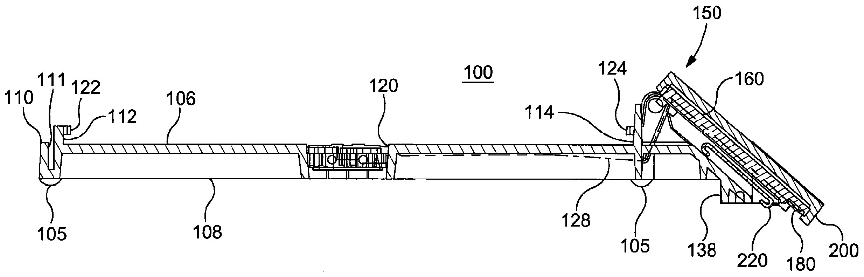

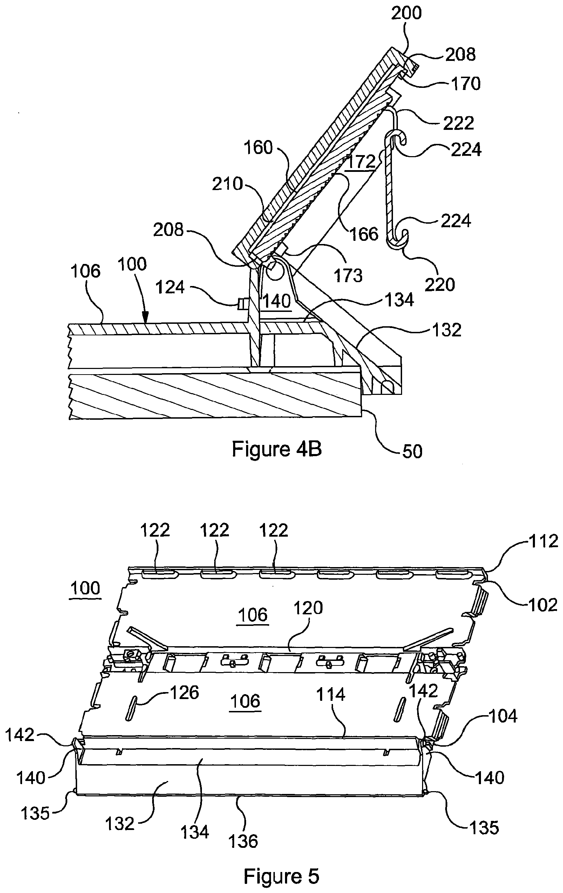

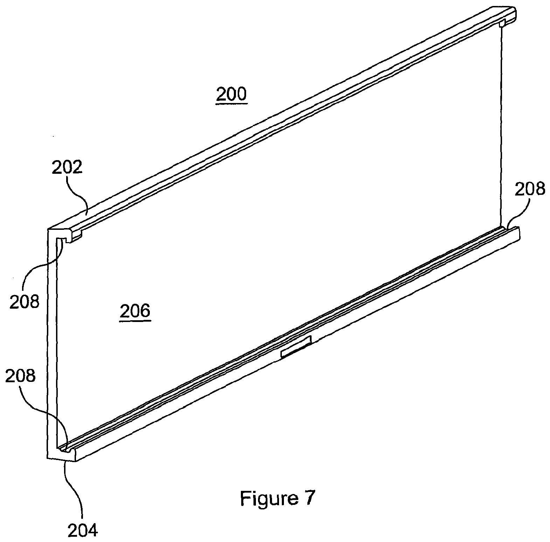

Figs. 3A to 4B show representative cross-sections of an assembled shelf tray 100, whereas Figs. 5 to 7 show perspective views of components of shelf tray 100. Corresponding numerals are used throughout Figs. 2 to 7. Shelf tray 100 may have any width. However, shelf trays of about 20 to 30 centimetres width have been found to be particularly suitable for a modular system.

An assembled shelf tray 100 is shown in Figs. 2 to 4B, and the tray component in isolation is shown in Fig. 5. Shelf tray 100 comprises a first end 104 and a second end 102. In use, when the shelf tray 100 is installed in a retail environment, the first end 104 faces the customer and the second end extends away from the customer, e.g. toward the rear of a shelving unit. Thus, the first end defines a front side which is the customer-facing end. A flat portion 106 forms the upper surface of the shelf tray on which products or installations may be arranged.

Approximately mid-way between the first end 104 and the second end 102, a recess is formed in the upper surface 106 of the tray 100 to define a channel 120. Channel 120 extends laterally, parallel to the front side, and accommodates electrical tracking and wiring. The electrical components are part of a bus bar system. The shelf tray comprises one or more channels 126 for wiring 128 to be provided between the bus bar channel 120 and the electrical components.

On its underside, shelf tray 100 is provided with sets of feet 105 to support the shelf tray. The feet 105 may be height-adjustable. The feet 105 may be made of a material that inhibits slipping, such as rubber. Preferably, the tray 100 is a plastics moulding and the underside of the tray 100 may comprise hollow portions to reduce the overall unit weight and material cost. The sides of shelf tray 100 are formed by skirting walls or reinforcing ribs 108 which may extend over a thickness 118. The shelf tray may be provided with additional reinforcing ribs 108.

Wall portions 112 and 114 extend upwards along the first and second ends 102, 104. The wall portions 112, 114 extend beyond the upper surface 106 and facilitate fixation of display elements on the upper surface. Each wall portion 112, 114 comprises one or more inward-facing protrusions 122, 124. The gaps between the protrusions and the upper surface 106 define a guide channel which allows surface fixtures to be slotted onto the upper surface 106.

Along the first end, one or more upward-facing hooks 110 extend upward behind the wall portion 112. The gap defined between the hooks 110 and wall 112 defines a slot 111 in which a panel may be accommodated. The panel may be a substrate for a graphic display.

The first end 104 comprises a forward facing front section 130. The front section 130 comprises a support 136 extending forward from the wall 114 at the height of upper surface 106. The support 136 has a first portion 134 and a second portion 132. The first portion 134 is a flat corresponding to the level of the top surface 106 which extends horizontally forward until it segues into the second portion 132 at a chamfer edge running parallel to the wall 114. The second portion 132 chamfers downwards from the horizontal portion 134 and extends forward and below the lower edge of the reinforcing ribs 108. The underside of the second portion 132 comprises a stepped edge 138 which provides a locating surface for location on a shelf 50.

When installed, the shelf tray 100 rests on the feet 105, and the locating surface of the stepped edge 138 can be pushed against the front edge of a shelf 50 on which the shelf tray 100 is to be provided. Thereby, alignment of the shelf tray 100 with the shelf 50 is facilitated. This aids achieving a neat appearance of the display shelf assembly. Further, the stepped edge 138 allows a configuration to be ensured in which the aligned front edge protrudes forward of a shelf 50.

On either side of the first portion 134 there is a side wall 140. Each side wall 140 carries a laterally outward facing protrusion 142 which serves as a hinge joint to carry the lighting unit 150 described below. On either side of the front section is a further laterally protruding support pin 135 which serves as a rest or stop for the lighting unit 150 as described below.

As shown in Figs. 3A to 4B, the lighting unit 150 is comprised of a diffuser 160, a LED strip 180, and a cover 200. The lighting unit 150 may further comprise an information panel 220.

The diffuser 160 is a moulded panel made of an acrylic-based clear compound that is optimised for its light transmitting properties. Suitable compounds are, for example PMMA's or modified PMMA's, such as those sold under the trade name Plexiglas (RTM), available from Evonik Industries AG, 64293 Darmstadt, Germany.

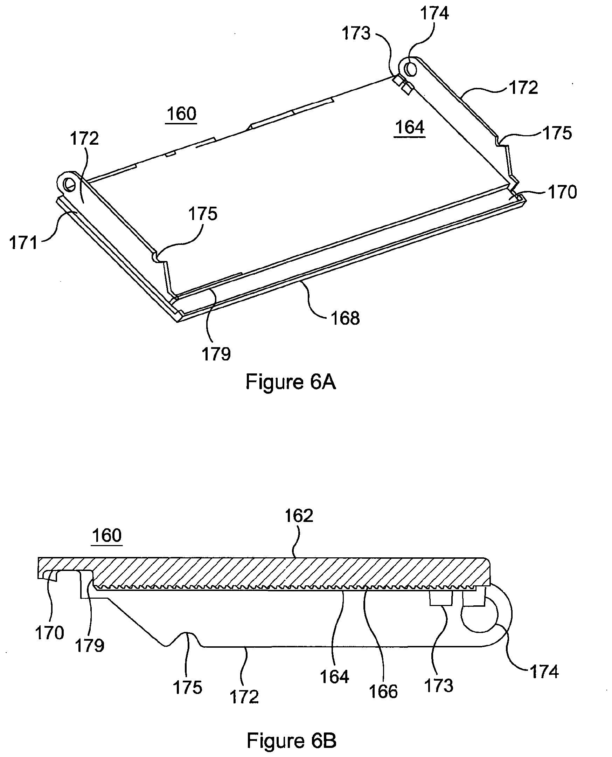

As shown in Fig. 6A, the diffuser 160 is substantially rectangular and has an elongate front face 162, an elongate rear face 164, an elongate upper edge, and an elongate lower edge 168. The rear face 164 has a surface texture 166 applied thereto. The surface texture 166 may be provided in the form of a plurality of laterally extending ridges covering at least a part of the rear face 164. Other surface treatment methods, for example shot blasting or moulded 3D textures may be employed to create the surface texture 166. Alternatively, a reflective panel may be provided on the rear surface 164 to prevent light from escaping therethrough and directing the light back into the diffuser. The reflective panel may be white or metallic and may be adhered to the rear surface 164.

A laterally extending longitudinal recess 170 is provided near the lower edge 168 on the rear face 164 of the diffuser 160. The recess 170 is dimensioned to receive an LED strip 180.

The diffuser 160 has two laterally depending side panels 172. Each side panel has an aperture 174 which is shaped to mate with the protrusion 142 of the side wall 140. A wire track 171 runs inboard or outboard of each side panel 172 and a wire trap 173 is provided near the aperture 174. The side panels 172 are spaced apart from another so as to allow them to be snap-fitted onto the protrusions 142 of side walls 140, thereby forming a hinged connection 178 allowing the diffuser 160 to pivot relative to the support 136. The edges of each side panel 172 have a notch 175 spaced from the aperture 174. Each notch 175 is spaced from the rear face 164. Wiring 128 that connects the LED strip 180 to the bus bar channel 120 is held near the hinged connection 178 by virtue of the wire trap 173 and leads from there through a wire track 171 to the LED strip 180. This arrangement helps ensuring that the wiring 128 required to supply power to the LED strip 180 does not impede the functionality of the lighting unit 150.

A cover 200 is attached to the diffuser 160. The cover 200 is a generally rectangular elongate body with a U-shaped cross-section, having side walls 202, 204. The side walls 202, 204 define a space 206 between them. The elongate dimension of cover 200 corresponds to that of the diffuser 160 onto which it is to be mounted. However, the height of the cover 200 is such that the diffuser 160 can be held in the space 206 defined by the side walls 202, 204. Walls 202, 204 comprise internal grooves 208 in which the elongate upper and lower edges of the diffuser 160 are retained. The grooves 208 are spaced from the inner surface of the cover 200. Thus, when the cover 200 is snapped onto the diffuser 160, the diffuser is retained at a predetermined distance defining a gap 210 between the inner surface of the cover 200 and the outer face 162 of the diffuser. The predetermined distance is wide enough to accommodate a substrate having a graphic printed thereon. The gap 210 opens to the sides of the lighting unit 150 so that a printed substrate can be inserted laterally. Alternatively or concurrently, at least part of the cover 200 may be provided with an information-containing element 212. The information-containing element 212 may be a self-adhesive panel. It may be decorative. The information-containing element may be applied to the outside of the cover 200. The self-adhesive panel may comprise a logo that is translucent so as to be suitable for back-illumination. The logo may have a dark-coloured vignette surround that is not fully opaque so as to enable it to glow slightly when illuminated from behind, thereby allowing various degrees of a silhouette effect to be achieved.

The hinged connection 178 allows the lighting unit 150 to be pivoted between a display position and a service position. In the display position the hinged connection 178 allows the diffuser 160 to depend from the support 136. In its display position, the diffuser 160 rests on the support pins 135 supporting the corresponding notches 175 and is thus generally aligned with the chamfered support portion 132. Because the notches 175 are spaced apart from the rear face 164, a gap 176 is defined between the upper surface of support portion 132 and the rear face 164 when the diffuser 160 lies on the support pins 135.

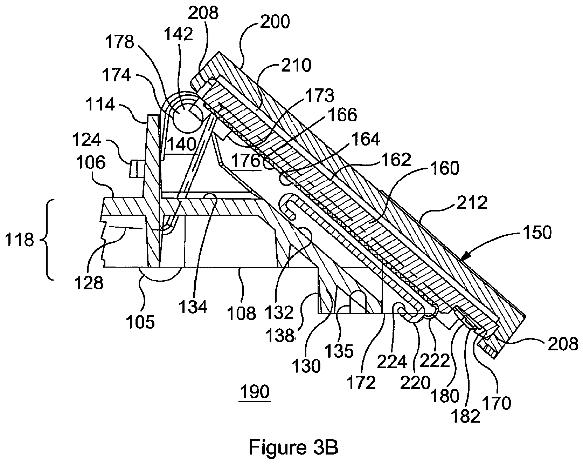

Fig. 3B shows an information panel 220 normal omitted from view. Information panel 220 is connected to the rear face 162 of the diffuser 160 by a live hinge 222. The live hinge 222 may be co-extruded as part of the information panel 220 and may comprise an elastomer material which provides flexibility and thus
allows the information panel 220 to be pivoted relative to the diffuser 160 repeatedly while avoiding stress fracture. The information panel 220 comprises a slot or channel 224 in which an information-containing substrate can be retained.

Still referring to Fig. 3B, gap 176 is dimensioned to accommodate the information panel 220 in the display position, i.e., when the lighting unit 150 rests on the support pins 135. The information panel 220 is covered by the diffuser 160 / cover 200. The thickness of the information panel 220 can be variable but is designed to be accommodated without difficulty within the gap 176 between the support surface 136 and the rear face 164. By way of this arrangement, during normal use, i.e., in the display position shown in Figs. 3A and 3B, the information panel 220 can remain hidden from view, e.g. when a substrate is provided in slot 210.

LED strip 180 comprises a strip 182 carrying a plurality of side-illuminating LEDs. The individual LEDs are grouped densely together on one side of the strip. The LEDs are spaced about 8 millimetres apart from another. On its other side the strip 182 comprises an adhesive layer which allows the strip 180 to be attached within the recess 170. The strip is opaque and may be made of a white or other reflective material. The strip may be a flexible circuit board that also contains other electronic components needed to control the LEDs. The LED strip 180 is oriented in the recess 170 so that the LEDs face a side wall 179 of the recess 170 and such that at least part of the light emitted from the LEDs is directed through the side wall 179 in a direction towards the elongate upper edge of the diffuser 160.

In other words, the side wall 179 of the recess 170 constitutes a light-receiving interface via which light from the emitted from the LEDs can enter the diffuser 160.

In its display position, the diffuser 160 rests on the support pins 135. The height of the diffuser 160 exceeds that of the support surface 136 so that the rear face 164 partially hangs over the front section 130. In particular, the recess 170 in which the LED strip 180 is provided hangs over the front edge of the front section 130. The LEDs of LED strip 180 are thus not concealed by the front section 130.

In operation, the LEDs of the lighting unit 150 emit light towards the elongate upper edge end of the diffuser 160 and against the inner side wall 179. A portion of light is directed into the diffuser 160, and passes straight through the diffuser 160. Diffuser 160 has a higher optical density than air and thus light within the diffuser 160 has an increased tendency to undergo total internal reflection. In the exemplary disclosure the surface texture 166 comprises an arrangement of a plurality of ridges which are shown as angular features in the drawings. These ridges interfere with the internal reflection of light reaching passing through the diffuser as they change the angle of incidence of the light upon the rear face and reflect and/or bend the light so that it passes back into the diffuser from the ridges at an angle that is too steep for internal reflection to occur when the light reaches the front face of the diffuser and a portion of the light is therefore enabled to escape the front face to back light the graphic located in the gap 210 between the diffuser 160 and the lighting unit 150. It will be appreciated by the skilled person that different surface textures aside from ridges can be used, providing that the effect is to disrupt the total internal reflection of light from the LEDs so that light is enabled to escape the front face 162 of the diffuser 160.

As an alternative, or in addition to the surface texture, a polymer may be used which contains an additive which has light dispersing effects, suitable polymers are, for example, Plexiglas (RTM) LED LD12, Plexiglas (RTM) LED LD24, Plexiglas (RTM) LED LD48, or Plexiglas (RTM) LED LD96, all available from available from Evonik Industries AG. These polymers are a transparent or translucent main polymer having a filler of transparent or translucent particles having a different refractive index from that of the main polymer. As light passes therethrough it is bent as it encounters the filler particles and is scattered, thereby enabling light to be emitted from the diffuser substantially perpendicular to the direction of light travel therethrough. However, as both the main polymer and the filler are transparent or translucent the material also allows some of the light to pass therethrough without being deflected. Other polymers having the same effect may also be used.

The front face 162 is preferably flat, as shown, which facilitates the exit of light radiation impinging orthogonally to the plane of the front face 162, or impinging at any angle. Thus, the combination of the refractive index and the geometric arrangement of the diffuser 160 provide a reflection mechanism which causes a sufficient proportion of the LED-emitted light to be deflected so that it passes through the front face 162. This allows a substrate provided in the gap 210 to be backlit indirectly by the LED strip 180.

The surface texture 166 assists in increasing the intensity of the back-light illumination to be provided.

In addition to the internal reflection mechanism, some light may exit the diffuser 160 through the rear face 162. This light is not projected into a well-defined direction and can result in a pleasant diffuse illumination of the tray. However, it may not be desirable for this light to exit from the diffuser 160 and accordingly a reflective surface may be applied to the rear face 164 of the diffuser, for example a white or metallic surface. This could be adhered to the rear face 164 or may be applied as a coating, to promote the internal reflection of light from the rear face. A portion of the LED light is transmitted through the diffuser 160 and exits the diffuser 160 at the elongate upper edge which allows products on the shelf tray 100 to be illuminated creating an up-lighting effect. The luminosity of the LED strip 180 is improved by densely packing the array of LEDs.

In addition to light being transmitted through or along the diffuser 160, a portion of the light emitted by LED strip 180 is reflected within the recess 170. The reflective properties of the strip 182, together with reflection by the walls of the recess and in boundaries between the diffuser 160 and the lighting unit 150, cause light to be emitted out of the recess 170 so that when the lighting unit 150 is in its display position, the light emitted from the recess 170 is emitted in a downward direction. The locating surface of the stepped edge ensures that the shelf tray protrudes over a shelf 50 on which it is provided. The combination of the locating surface and the unconcealed recess 170 allows the light reflected out of recess 170 to illuminate areas below the shelf tray 100, and consequently also areas below shelf 50. As can be seen in Figure 1 cosmetic display shelves are traditionally provided in stacks of shelves, and accordingly, the lighting unit can illuminate products on display on the shelf below that on which it is located. The cross-section of recess 170 can be configured to optimise the light distribution 190 (indicated in Fig. 3B) that illuminates the area underneath shelf 50. This provides more design freedom to achieve an illumination angle larger than that of hitherto known systems. In particular, as the diffuser 160 is at an inclined angle and as the sidewalls of the recess 170 are substantially perpendicular to the diffuser 160, internal reflection of light within the recess 170 will cast a light distribution 190 that is thrown backwards at a wide spread angle, allowing products towards the back of the shelf below to be evenly illuminated. The centre of the light spread may be oriented substantially normal to the diffuser, and portions of the light may spread horizontally and vertically. Ways of modifying the surface and/or the geometry of the recess 170, to allow the angle and intensity of the light distribution 190 below the shelf 50 to be altered, will be apparent to the skilled person.

Thus, in operation, the lighting unit 150 provides a multi-directional lighting solution, which enables back-lighting of a display panel at the front of a shelf, illumination from below of products at the front of the shelf, and also down lighting of articles placed on a further shelf located below the lighting unit of the invention. This is all achieved with a single strip of LED lights, thereby minimising the energy consumption of the lighting unit. Furthermore, by directing the light through the diffuser 160 prior to up-lighting products at the front of the shelf, the minimum distance of the light source from these products is increased. Even though LEDs are far more efficient than incandescent or fluorescent lighting, they do still produce some heat. Therefore, by increasing the minimum distance of the lighting source from the product, the level of heat exposure of the products, to which they would otherwise be exposed, is minimised. Further, the design enables the diffuser and cover to function as a heat sink for the LEDs.

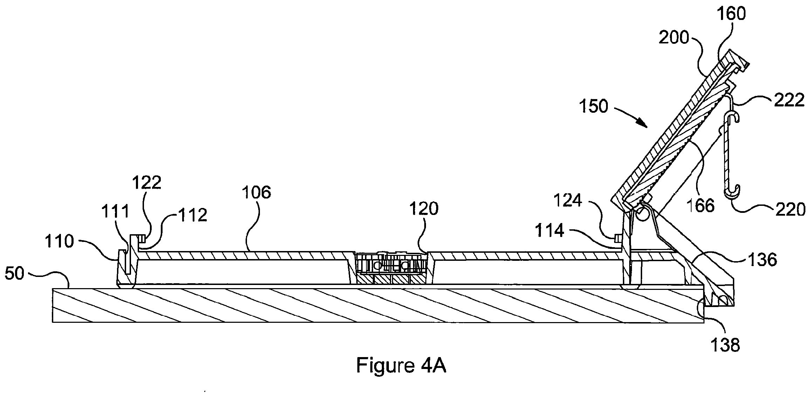

The lighting unit 150 can be pivoted about hinged connection 178 from a display position, shown in Figs. 3A and 3B, to a service position, shown in Fig. 4A and 4B. The shelf tray 100 may comprise a mechanism configured to sense whether or not the lighting unit is in the display condition. The mechanism may alter the illumination behaviour of the LED strip 180 when the lighting unit 150 is pivoted between the display position and the service position. Wiring is laid along the wiring track 171 to avoid interference of wiring 128 with the hinge mechanism.

When the lighting unit 150 is pivoted upwards into its service position, the information panel is not retained within the gap 176 and thus free to hang from the diffuser 160. The information panel 220 allows information to be made available for use by employees while remaining concealed from the customer. Such information can be used for stocking purposes and may comprise barcodes, QR keys or alpha numeric data or product information needed for stock management and restocking. An information panel 220 that depends flexibly from the lighting unit 150 allows the information to be accessed conveniently even if shelves are high up or at a low level, yet be concealed in the display position so that only the required product information is displayed to the customer.

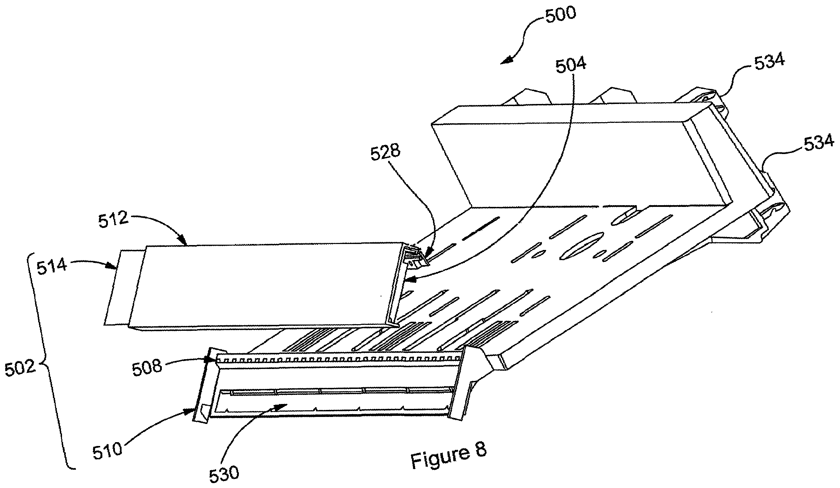

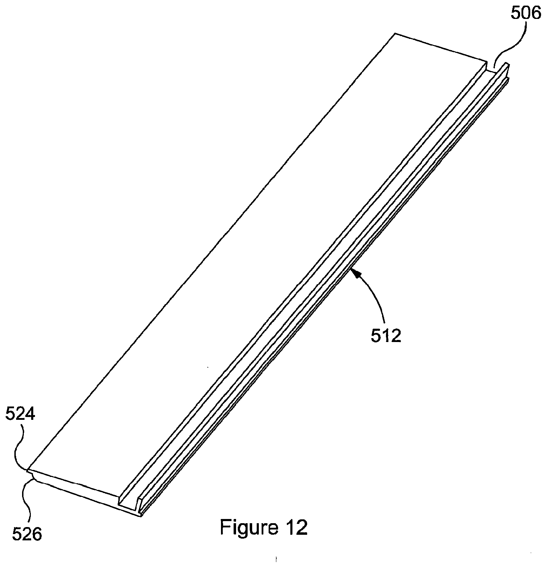

Referring to Figures 8 to 12, a shelf 500 is shown. The shelf 500 has towards its front edge (the front edge being the end that in use projects towards the user) a lighting unit 502.

The lighting unit 502 has a transparent or translucent elongate diffuser 504 arranged along it. The diffuser is substantially rectangular and comprises an elongate upper edge, an elongate lower edge, an elongate front face and an elongate rear face. In use, the elongate front face faces the user. A recessed channel 506 is provided adjacent to and substantially extending along the elongate upper edge of the diffuser 504.

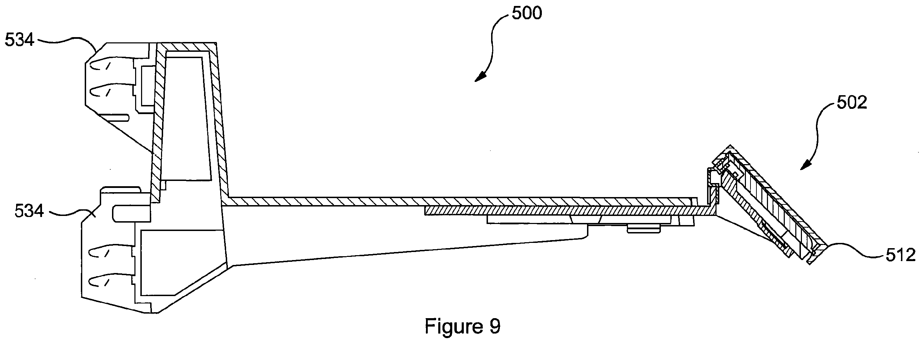

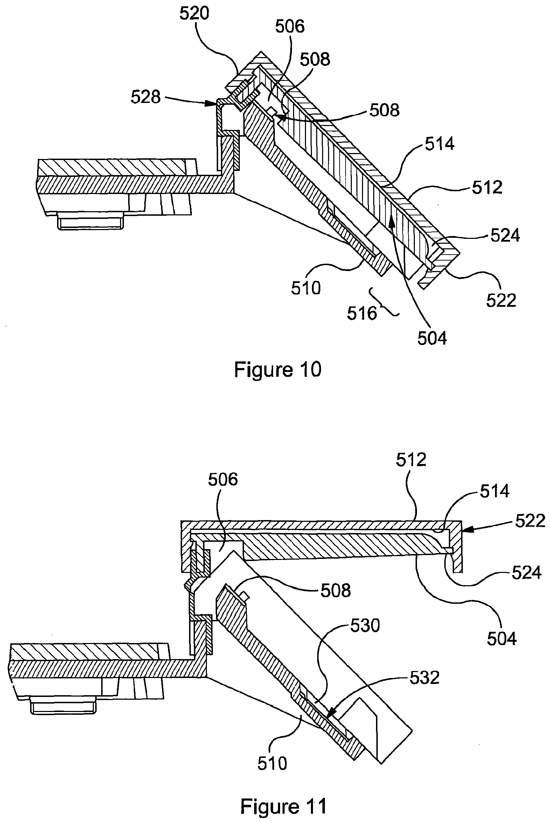

A lighting element 508 is provided attached to a support structure 510 of the lighting unit 502. The lighting element 508 is positioned such that, with the lighting unit 502 in the service position as shown in Figures 9 and 10, the lighting element is located in the recessed channel 506. The lighting element 508 is a LED strip light, i.e. it comprises a narrow circuit board on which a plurality of LEDs are mounted. The LEDs are orientated on the strip such that, in operation, they emit light in a direction from one elongate edge of the diffuser 504 to the other elongate edge of the diffuser, i.e. they direct light sideways through the diffuser, as opposed to directing the light in a direction out of the front or rear face of the diffuser.

As described above in relation to the first example, a portion of light is directed into the diffuser 504, and passes straight through the diffuser 504. Diffuser 504 has a higher optical density than air and thus light within the diffuser 504 has an increased tendency to undergo total internal reflection. In order to increase the amount of light that can escape the front face of the diffuser 504, the diffuser may be moulded from a polymer which contains an additive which has light dispersing effects, suitable polymers are, for example, Plexiglas (RTM) LED LD12, Plexiglas (RTM) LED LD24, Plexiglas (RTM) LED LD48, or Plexiglas (RTM) LED LD96, all available from available from Evonik Industries AG. These polymers are a transparent or translucent main polymer having a filler of transparent or translucent particles which have a different refractive index from that of the main polymer. As light passes therethrough and as it encounters the filler particles, it is bent and scattered, thereby enabling light to be emitted from the diffuser substantially perpendicular to the direction of light travel therethrough. However, as both the main polymer and the filler are transparent or translucent, the material also allows some of the light to pass therethrough without being deflected. Other polymers having the same effect may also be used. A reflective surface may be applied to at least a part of the rear face of the diffuser 504 to reflect at least some of the light scattered towards the rear elongate face back in a direction towards the front elongate face.

The diffuser 504 may have a tapered rear face that tapers in a direction towards the elongate front face with distance from the top edge. This results in the rear face being angled at an incline relative to the direction of travel of light from the LEDs towards the bottom elongate edge. This incline increases the angle at which the reflected light in reflected internally, and can increase the amount of light escaping the front face of the diffuser 504.

A substantially transparent elongate cover 512 is located over the diffuser 504 and defines a gap between it and the diffuser 504 that can receive a display graphic 514. The display graphic may, for example, be advertising the products or the brand of product on display on the shelf and is designed for back illumination. In this way the display graphic is back-lit by the light escaping from the front face of the diffuser 504.

As can be seen in the Figures, a portion 516 of the lighting unit overhangs the lower end of the support structure 510 at the front of the shelf 500. Light escapes the diffuser 504 in all directions in this region and either emits directly downwards, or is reflected by the internal surfaces of the cover 512 or internal reflection of the diffuser, so as to travel in a downwards direction from the overhanging part 516 of the lighting unit. This arrangement also serves to provide a down-lighting effect, illuminating products on a shelf or in an area below the shelf on which the lighting effect of the invention isprovided.

Optionally, the support structure 510 may be made of a substantially transparent or translucent material so that light escaping from the back elongate face of the diffuser 504 can pass therethrough so as to also provide a down-lighting effect.

In addition to the light emitting in a forward direction through the elongate front face of the diffuser 504, and in addition to the light escaping in a downward direction, the lighting element may optionally also provide an up lighting effect on products on the shelf to which the lighting unit is attached. As the diffuser 504 and the cover 512 are of transparent or translucent material, a small amount of the light emitting from the LEDs will reflect off the side wall 518 of the channel 506 and will emit at an upper edge of the lighting unit 502.

A reflective strip may be attached to the elongate top surface 520 and/or the elongate bottom surface 522 of the cover to increase the internal reflection of light and reduce the amount of light escaping at these points. In particular, the use of a reflective strip at the bottom edge will assist in directing the light in the desired directions.

The lower elongate edge of the diffuser 504 may be provided with a shaped profile as shown in the drawings. The narrow tongue 524 fits into a corresponding recess in the cover 512 so as to enable the two parts to snap together, and the remainder of the end of the diffuser is provided with a radiused profile 526. This radiused profile changes the angle of incidence of the light emitted from the LED on this edge section of the diffuser and assists in reflecting light from this section in a downwards direction to enhance the down-lighting effect.

The diffuser 504 is attached to the support structure 510 by a hinge 528. The hinge 528 is a live hinge but, as will be appreciated, traditional type hinges could also be used. The hinge 528 is attached to the diffuser at its elongate upper edge. This allows the diffuser 504, cover 512, and graphic 514 to be pivoted upwards from its display position shown in Figure 10 to a service position shown in Figure 11. The support structure 10 can be provided with a mounting section 530 in which a substrate 532 printed with product relevant information can be mounted. The product relevant information may include details of the product to be placed on the shelf and may contain barcodes or other readable information relevant to those products that can be read during, for example, stocktaking. As can be seen from Figures 10 and 11, the lighting strip is attached to, and extends from, the support element 10 such that, when the diffuser 504 is pivoted about its hinge 528 into the display position, the lighting strip 508 extends from the support structure 510 into the recessed channel 506 in the diffuser so that it can light it.

The shelf is provided with attachment means 534 by which it can be attached to an upright structure from which the shelf will project. A plurality of the shelf units may be provided on a single structure to provide a stack of shelves for use in a retail environment.

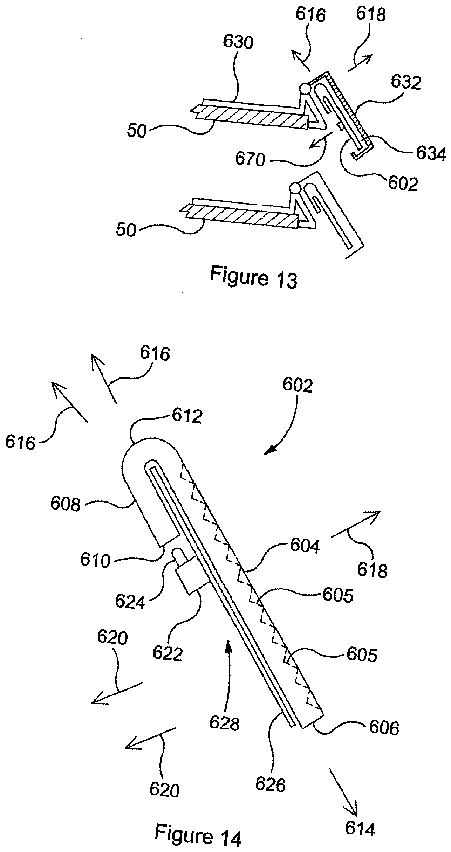

Now turning to Figure 13, part of a shelf tray arrangement 600 is shown. The shelf tray arrangement 600 comprises lighting unit with a diffuser 602. It will be understood that the diffuser 602 is intended to be installed as part of a lighting unit comprising a support structure 630, a cover 632, and a space 634 to receive a display graphic. The diffuser 602 will be located on the support structure 630 which may allow the diffuser to overhang a shelf 50 on which the lighting unit is provided. Further, the cover 632 of the lighting unit will be provided over the diffuser 602.

The diffuser 602 is, akin to the diffusers 160 and 504 described above, made of an acrylic-based clear compound that is optimised for its light transmitting properties. Suitable compounds are, for example PMMA's or modified PMMA's, such as those sold under the trade name Plexiglas (RTM), available from Evonik Industries AG, 64293 Darmstadt, Germany.

As shown in Figure 14, the diffuser 602 has a J-section profile and comprises a long arm 604, a short arm 608, and a bend 612. The curve of the bend 612 is about 180° so that the short arm 608 extends essentially parallel to the long 604. The curve may cover slightly more or slightly less than 180°. For instance, the arms may converge, and the angle covered by the bend 612 may be up to including 185°, or 190°. The arms may diverge, and the angle covered by the bend 612 may be between 180° and including 175°, or 170°. The end 606 of the long arm 604 constitutes an elongate lower edge of the diffuser 602. The bend 612 defines an elongate upper edge of the diffuser 602.

It is understood that, when installed, the diffuser 602 is likely to be installed in the display shelf at an inclined angle such that an outer surface of the long arm 608 faces forward and upward, i.e., in a direction indicated by an arrow 618 to a side from which a customer approaches the shelf. The upper elongate edge faces upward and towards the back, i.e., in a direction of the products on the shelf, as indicated by arrows 616. The lower elongate edge faces downward and forward, i.e., in a direction of a space below the display shelf, indicated by an arrow 614. An inner surface of the long arm 608 faces down and back, i.e., in a direction indicated by arrows 620, i.e. to a space below the display shelf. In the space below the shelf, another shelf with products may be located.

As shown in Figure 14, the long arm 604 is at least sufficiently longer than the short arm 608 so that it extends beyond the end of the short arm 608. Thereby, a recess 628 is formed between the long arm 604 and the short arm 608. The elongate edge of the short arm 608 thus constitutes a side wall of the recess 628 which provides a light-receiving interface 610.

The diffuser 602 with the J-section profile is configured to act as a light pipe. By this is meant that the diffuser 602 has light-guiding properties to influence how light propagates within the diffuser after it has entered through the light-receiving interface 610. The light-guiding properties may be provided by material composition to influence the refractive index and/or by surface angles, e.g. by providing a specific surface profile or surface texture.

A lighting element in the form of an LED-strip 622 is located on the diffuser 602 and positioned to supply at least part of light emitted from the LED-strip 622 to the light-receiving interface 610. The LEDs 624 of the LED-strip 622 are side-emitting LEDs and are oriented such that, in operation, light emitted from the LEDs 624 is directed into the light-receiving interface 610. The LEDs 624 are positioned from the light-receiving interface 610 at such a distance that at least 10%, 20%, 30%, 40%, 50%, 60%, 70%, 80%, or 90% of the light emitted by the LEDs 624 shines onto the light-receiving interface 610. The LEDs 624 are positioned near the light-receiving interface 610. The LEDs 624 are positioned from the light-receiving interface 610 at a distance of at least, or at a distance of no more than, 0.1, 0.2, 0.3, 0.4, 0.5, .6, 0.7, 0.8, 0.9, 1, 2, 3, 4, 5, 10, 15, 20, 25, 30, 35, 40, 45, or 50 mm (millimetres). A portion of the light emitted from the LEDs 624 may be emitted perpendicularly to the light-receiving interface 610 and will thus not enter the light-receiving interface 610. That portion may be emitted from the LEDs 624 roughly in the direction of arrows 618 and 620. The width of the gap between the LEDs 624 and the light-receiving interface 610 allows the proportion of light emitted perpendicularly to be better controlled.

Light entering the light-receiving interface 610 propagates initially mainly forward toward the bend 612. At the bend 612, a portion of the light will be scattered within the diffuser 602, e.g., because it undergoes total internal reflection, and thus propagate effectively around the bend into the long arm 604. Because of the curvature of the bend, a portion of the light reaching the bend will not undergo internal reflection and, instead, exit in a direction roughly indicated by arrows 616 and thus provide an up-lighting effect. It will be understood that the light propagation behaviour and thus the proportion of light reaching the long arm 604 and the proportion of light exiting via the bend 612 is determined by the material composition of the bend 612, by the geometry and curvature of the bend, and by the surface roughness or texture of the bend 612. The bend 612 may be provided with a surface coating.

The outer surface of the long arm 604 may be tapered or may be provided with a surface texture or profile, including such methods as described with reference to diffusers 160 and 504 described above. In Figure 14, a surface texture is indicated by prisms 605 that are drawn in a dashed line. By choosing the geometric configuration of the outer surface of the long arm 604, some degree of control over the direction in which light exits the long arm 612 can be provided. The long arm 604 can be designed so that light will have a tendency to exit in a forward direction, as indicated by arrow 618. Thereby, a diffuse and relatively even illumination is created, providing a back-lighting effect in direction 618, which permits a display graphic in front of the diffuser 602 to be back-lit.

A light-shielding strip 626 may be located in the recess 628 between the long arm 604 and the short arm 608. Strip 626 may be made from a light-shielding composition or may comprise a light-shielding layer. In that case, light components emitted from the LEDs 624 directly toward the long arm 604, in the direction of arrow 618, are inhibited from propagating directly through the long arm 604. Light shone onto the long arm 604 directly from the LEDs 624 may be undesirable because it creates relatively bright illumination points which can stand out, thereby creating an impression of an uneven distribution of light in the back-lit illumination area 634. Thus, a diffuser 602 comprising a light-shielding strip 626 provides a better degree of control over the back-lighting light throw, i.e. the light throw in the direction of arrow 618.

Conveniently, the LED strip 622 may be provided on the light-shielding strip 626, as shown in Figure 14. A plurality of light-shielding strips may be provided at locations where light propagation is not desired.

A surface of the strip 626 may be reflective. For instance, the light-shielding properties of the light-shielding strip 626 may be provided by a reflective surface. Thus, LED light emitted toward the light-shielding strip 626 is reflected in a direction of arrows 620. In this direction 620, more illumination may be desirable in order to increase the down-lighting effect on the space below the diffuser.

The diffuser arrangement using a light-pipe avoids sharp corners within the diffuser because of the curvature of the bend, while at the same time providing a flat light-receiving interface. Thereby, the number of features causing shadows and/or focus lines is reduced. This provides a better degree of control over the quality of the light throws created by the diffuser.

Further, the properties of the light throws can be influenced by various factors, including geometry (thickness and/or surface configuration and/or coating) and material composition of the arms 604, 608, the relative lengths of the arms 604, 608 with respect to each other, the curvature and/or thickness of the bend 612, the position of the LED strip 622 relative to the light-receiving interface 610, and/or by a provision of one or more light-shielding strips 626. Thus, while some of these factors may be determined by external requirements, the fact that a large number of factors may be modified provides a large degree of freedom to influence the properties of the light throws.

A further advantage of the light pipe design is that the LEDs 624 may be located more centrally between the upper edge and the lower edge of the diffuser. This facilitates mounting the diffuser to the top or bottom, if this is desired for changing the diffuser between display position and a service position. Because the LEDs 624 may be located more centrally, the diffuser 602 may be provided as a top-flip arrangement (i.e., configured to allow pivoting from a display position upward about the upper edge to a service position) or as a bottom-flip arrangement (i.e., configured to allow pivoting from a display position downward about the lower edge to a service position).

## Claims

1. A lighting unit for the front edge of a display shelf, the lighting unit comprising:
a transparent or translucent elongate diffuser (602) comprising an elongate upper edge, an elongate lower edge (606), an elongate front face and an elongate rear face, said diffuser having a light-receiving interface (610) extending substantially in a direction of one of the elongate upper and lower edge;
a lighting element comprising a plurality of light emitting diodes (624) attached to a circuit board to form a light strip (622), wherein the light emitting diodes (624) are oriented to direct light towards the light-receiving interface (610) and through said diffuser (602) in a direction from one elongate edge towards the other elongate edge; and
a substantially transparent elongate cover (632) located over the diffuser (602) and defining a gap therebetween for receiving a display graphic;
wherein said diffuser (602) tapers in a direction from one elongate edge to the other elongate edge so that the thickness of the diffuser reduces with distance from the light strip (622);
wherein the diffuser (602) has a J-section profile comprising a long arm (604), a short arm (608), and a bend (612), wherein the end of the long arm (604) defines one of the upper and lower edge, wherein the bend (612) defines the other of the upper and lower edge, and wherein the end of the short arm (608) provides the light-receiving interface (610); and
wherein said diffuser (602) is configured to scatter a portion of the light passing therethrough towards the cover (632) so as to, in use, allow a display graphic in said gap to be backlit; and wherein the lighting unit is configured to direct a portion of the light in a downward direction (614).

2. The lighting unit according to claim 1, wherein the light-receiving interface (610) is adjacent to and extends substantially along one of the elongate upper and lower edge.

3. The lighting unit according to claim 1 or 2, wherein said diffuser (602) transmits at least a portion of the light therethrough to be emitted at the elongate upper edge thereof.

4. The lighting unit according to any one of the preceding claims, wherein a light-impeding strip (626) is positioned between the lighting element (624, 622) and the long arm (604).

5. The lighting unit according to any one of the preceding claims, wherein said light-receiving interface (610) is provided by a recessed channel, the recessed channel being located adjacent one of the elongate upper and lower edge, and wherein said lighting element (624, 622) is located in said recessed channel and the light emitting diodes (624) are oriented to direct light from said recess through said diffuser (602) in a direction from one elongate edge towards the other elongate edge.

6. The lighting unit according to any one of the preceding claims, wherein the light emitting diodes (624) are side emitting light emitting diodes that emit light from one side thereof and said light strip (622) is arranged proximate said light-receiving interface in an orientation such that the light emitting side of the diodes (624) is directed towards the other of the upper and lower edge.

7. The lighting unit according to any one of the preceding claims, wherein one face of the diffuser (602) is provided with a surface texture to increase the amount of light scattered towards the cover, wherein, optionally, the surface texture comprises a plurality of ridges.

8. The lighting unit according to any one of the preceding claims, further comprising a reflective strip attached to one or more of the elongate rear face and the elongate lower edge.

9. The lighting unit according to any one of the preceding claims, wherein the diffuser (602) comprises a first material comprising a polymer containing particles of a second transparent or translucent material having a different refractive index than the first material.

10. The lighting unit according to any one of the preceding claims, further comprising a support structure to which the diffuser and cover are attached by a hinge located adjacent one of the elongate upper and lower edge, so as to enable the diffuser and cover to be pivoted either upwards or downwards from a display position to a service position.

11. The lighting unit according to claim 10, wherein either: the lighting strip (622) is attached to, and extends from, the support element in a position such that, when the lighting element is in its display position the lighting strip extends from said support structure into the recessed channel in the diffuser; or the lighting strip (622) is attached to the diffuser in the recessed channel so that it pivots with the diffuser between the display and service positions.

12. The lighting unit in accordance with claim 10 or claim 11, wherein, with the diffuser (602) and cover in the display position, the support structure supports said diffuser and cover at an incline.

13. The lighting unit according to any one of the preceding claims, comprised in a shelf (50) for displaying products, said shelf comprising:
a substantially horizontal platform; wherein
said lighting unit at least partially overhangs the front section of the substantially horizontal platform.

## Patentansprüche

1. Beleuchtungseinheit für die Stirnkante eines Auslageregals, wobei die Beleuchtungseinheit Folgendes beinhaltet:
einen transparenten oder durchscheinenden länglichen Diffusor (602), beinhaltend eine längliche obere Kante, eine längliche untere Kante (606), eine längliche Stirnseite und eine längliche Rückseite, wobei der Diffusor eine lichtempfangende Schnittstelle (610) aufweist, welche sich im Wesentlichen in eine Richtung einer der länglichen oberen und unteren Kante erstreckt;
ein Beleuchtungselement, beinhaltend eine Vielzahl von lichtemittierenden Dioden (624), befestigt an einer Leiterplatte zum Bilden eines Lichtstreifens (622), wobei die lichtemittierenden Dioden (624) ausgerichtet sind, um Licht in Richtung der lichtempfangenden Schnittstelle (610) und durch den Diffusor (602) in eine Richtung von einer länglichen Kante zu der anderen länglichen Kante zu richten; und
eine im Wesentlichen transparente längliche Abdeckung (632), befindlich über dem Diffusor (602) und welche einen Spalt dazwischen zur Aufnahme eine Auslagegrafik definiert;
wobei der Diffusor (602) sich in eine Richtung von einer länglichen Kante zu der anderen länglichen Kante dergestalt verjüngt, dass die Dicke des Diffusors sich mit zunehmendem Abstand von dem Lichtstreifen (622) verringert;
wobei der Diffusor (602) ein J-Querschnittsprofil aufweist, welches einen langen Arm (604), einen kurzen Arm (608) und eine Kurve (612) aufweist, wobei das Ende des langen Arms (604) eine der oberen und der unteren Kante definiert, wobei die Kurve (612) die andere der oberen und der unteren Kante definiert und wobei das Ende des kurzen Arms (608) die lichtempfangende Schnittstelle (610) bereitstellt; und
wobei der Diffusor (602) konfiguriert ist, um einen Teil des hierdurch passierenden Lichts in Richtung der Abdeckung (632) dergestalt zu streuen, dass es, im Gebrauch, eine Auslagegrafik in dem Spalt in die Lage versetzt, hinterleuchtet zu werden; wobei die Beleuchtungseinheit konfiguriert ist, um einen Teil des Lichts in eine Abwärtsrichtung (614) zu richten.

2. Beleuchtungseinheit nach Anspruch 1, wobei die lichtempfangende Schnittstelle (610) an eine der länglichen oberen und unteren Kante grenzt und sich im Wesentlichen entlang dieser erstreckt.

3. Beleuchtungseinheit nach Anspruch 1 oder 2, wobei der Diffusor (602) mindestens einen Teil des Lichts dadurch durchlässt, damit dieses an der länglichen oberen Kante davon ausgesendet wird.

4. Beleuchtungseinheit nach einem der vorhergehenden Ansprüche, wobei der lichtbehindernde Streifen (626) zwischen dem Beleuchtungselement (624, 622) und dem langen Arm (604) positioniert ist.

5. Beleuchtungseinheit nach einem der vorhergehenden Ansprüche, wobei die lichtempfangende Schnittstelle (610) durch einen vertieften Kanal bereitgestellt wird, wobei der vertiefte Kanal angrenzend an eine der länglichen oberen und der länglichen unteren Kante befindlich ist, und wobei das Beleuchtungselement (624, 622) in dem vertieften Kanal befindlich ist und die lichtemittierenden Dioden (624) ausgerichtet sind, um Licht von der Vertiefung durch den Diffusor (602) in eine Richtung von einer länglichen Kante zu der anderen länglichen Kante zu richten.

6. Beleuchtungseinheit nach einem der vorhergehenden Ansprüche, wobei die lichtemittierenden Dioden (624) seitenlichtemittierende Dioden sind, welche Licht von einer Seite davon aussenden und der Lichtstreifen (622) unmittelbar der lichtempfangenden Schnittstelle in einer solchen Ausrichtung angeordnet ist, dass die lichtemittierende Seite der Dioden (624) in Richtung der anderen der oberen und der unteren Kante gerichtet ist.

7. Beleuchtungseinheit nach einem der vorhergehenden Ansprüche, wobei eine Seite des Diffusors (602) mit einer Oberflächenstruktur versehen ist, um die Menge an in Richtung der Abdeckung gestreutem Licht zu erhöhen, wobei optional die Oberflächenstruktur eine Vielzahl von Stegen beinhaltet.

8. Beleuchtungseinheit nach einem der vorhergehenden Ansprüche, zudem beinhaltend einen reflektierenden Streifen, welcher an einer oder mehreren der länglichen Rückseite und der länglichen unteren Kante befestigt ist.

9. Beleuchtungseinheit nach einem der vorhergehenden Ansprüche, wobei der Diffusor (602) ein erstes Material beinhaltet, welches ein Polymer beinhaltet, welches Partikel eines zweiten transparenten oder durchscheinenden Materials beinhaltet, welches einen anderen Brechungsindex als das erste Material aufweist.

10. Beleuchtungseinheit nach einem der vorhergehenden Ansprüche, zudem beinhaltend eine Stützstruktur, an welcher der Diffusor und die Abdeckung durch ein Scharnier befestigt sind, welches an eine der länglichen oberen und unteren Kante angrenzt, um den Diffusor und die Abdeckung in die Lage zu versetzen, entweder aufwärts oder abwärts von einer Auslageposition in eine Wartungsposition geschwenkt zu werden.

11. Beleuchtungseinheit nach Anspruch 10, wobei entweder: der Beleuchtungsstreifen (622) an dem Stützelement befestigt ist und sich von diesem in einer Position dergestalt weg erstreckt, dass, wenn das Beleuchtungselement in seiner Auslageposition steht, der Leuchtstreifen sich von der Stützstruktur in dem vertieften Kanal in den Diffusor erstreck; oder der Beleuchtungsstreifen (622) an dem Diffusor in dem vertieften Kanal dergestalt befestigt ist, dass er mit dem Diffusor zwischen der Auslage- und der Wartungsposition schwenkt.

12. Beleuchtungseinheit nach Anspruch 10 oder 11, wobei, mit dem Diffusor (602) und der Abdeckung in der Auslageposition, die Stützstruktur den Diffusor und die Abdeckung in einer Neigung stützt.

13. Beleuchtungseinheit nach einem der vorhergehenden Ansprüche, enthalten in einem Regal (50) zur Auslage von Produkten, wobei das Regal Folgendes beinhaltet:
eine im Wesentlichen waagerechte Plattform; wobei
die Beleuchtungseinheit mindestens teilweise über den Stirnabschnitt der im Wesentlichen waagerechten Plattform übersteht.

## Revendications

1. Unité d'éclairage pour le bord avant d'un présentoir, l'unité d'éclairage comprenant :
un diffuseur allongé transparent ou translucide (602) comprenant un bord supérieur allongé, un bord inférieur allongé (606), une face avant allongée et une face arrière allongée, ledit diffuseur présentant une interface de réception de la lumière (610) s'étendant sensiblement dans une direction d'un des bords supérieur et inférieur allongés ;
un élément d'éclairage comprenant une pluralité de diodes électroluminescentes (624) fixées à une carte à circuit permettant de former une bande lumineuse (622), dans laquelle les diodes électroluminescentes (624) sont orientées de façon à diriger la lumière vers l'interface de réception de lumière (610) et à travers ledit diffuseur (602) dans une direction d'un bord allongé vers l'autre bord allongé ; et
un couvercle allongé sensiblement transparent (632) situé sur le diffuseur (602) et définissant un intervalle entre eux pour recevoir un écran graphique ;
dans laquelle ledit diffuseur (602) se rétrécit dans une direction depuis un bord allongé vers l'autre bord allongé de sorte que l'épaisseur du diffuseur se réduise avec la distance par rapport à la bande lumineuse (622) ;
dans laquelle le diffuseur (602) présente un profil à section en J comprenant un bras long (604), un bras court (608) et une pliure (612), dans laquelle l'extrémité du bras long (604) définit un du bord supérieur et inférieur, dans laquelle la pliure (612) définit l'autre du bord supérieur et inférieur, et dans laquelle l'extrémité du bras court (608) fournit l'interface de réception de lumière (610) ; et
dans laquelle ledit diffuseur (602) est configuré pour diffuser une partie de la lumière passant à travers vers le couvercle (632), de façon, en cours d'utilisation, à permettre le rétroéclairage d'un écran graphique dans cet intervalle ; et dans laquelle ladite unité d'éclairage est configurée pour diriger une partie de la lumière vers le bas (614).

2. Unité d'éclairage selon la revendication 1, dans laquelle l'interface de réception de lumière (610) est adjacente à l'un des bords supérieur et inférieur allongés et s'étend sensiblement le long de ceux-ci.

3. Unité d'éclairage selon la revendication 1 ou 2, dans laquelle ledit diffuseur (602) transmet au moins une partie de la lumière passant au travers de lui-même pour qu'elle soit émise sur le bord supérieur allongé de celui-ci.

4. Unité d'éclairage selon l'une quelconque des revendications précédentes, dans laquelle une bande d'obstruction de la lumière (626) est positionnée entre l'élément éclairant (624, 622) et le bras long (604).

5. Unité d'éclairage selon l'une quelconque des revendications précédentes, dans laquelle ladite interface de réception de lumière (610) est fournie par un canal évidé, le canal évidé étant situé de manière adjacente à un des bords supérieur et inférieur allongés, et dans lequel ledit élément d'éclairage (624, 622) est situé dans ledit canal évidé et les diodes électroluminescentes (624) sont orientées de façon à diriger la lumière depuis ladite cavité à travers ledit diffuseur (602) dans une direction depuis un bord allongé vers l'autre bord allongé.

6. Unité d'éclairage selon l'une quelconque des revendications précédentes, dans laquelle les diodes électroluminescentes (624) sont des diodes électroluminescentes à émission latérale qui émettent de la lumière depuis un côté correspondant et ladite bande lumineuse (622) est agencée près de ladite interface de réception de lumière dans une orientation telle que le côté électroluminescent des diodes (624) est dirigé vers l'autre du bord supérieur et inférieur.

7. Unité d'éclairage selon l'une quelconque des revendications précédentes, dans laquelle une face du diffuseur (602) est dotée d'une texture de surface visant à augmenter la quantité de lumière diffusée vers le couvercle, dans laquelle, optionnellement, la texture de surface comprend une pluralité d'arêtes.

8. Unité d'éclairage selon l'une quelconque des revendications précédentes, comprenant en outre une bande réfléchissante fixée à une ou plusieurs de la face arrière allongée et du bord inférieur allongé.

9. Unité d'éclairage selon l'une quelconque des revendications précédentes, dans laquelle le diffuseur (602) comprend un premier matériau comprenant un polymère contenant des particules d'un second matériau transparent ou translucide présentant un indice de réfraction différent du premier matériau.

10. Unité d'éclairage selon l'une quelconque des revendications précédentes, comprenant en outre une structure de support à laquelle le diffuseur et le couvercle sont fixés par une charnière située de manière adjacente à un du bord supérieur et inférieur allongé, de façon à permettre le pivotement du diffuseur et du couvercle vers le haut ou vers le bas, d'une position d'affichage à une position de maintenance.

11. Unité d'éclairage selon la revendication 10, dans laquelle soit: la bande lumineuse (622) est fixée à l'élément de support et s'étend depuis celui-ci, dans une position telle que, lorsque l'élément d'éclairage est dans sa position d'affichage, la bande lumineuse s'étend depuis ladite structure de support dans le canal évidé dans le diffuseur ; ou la bande lumineuse (622) est fixée au diffuseur dans le canal évidé de façon à pivoter avec le diffuseur entre les positions d'affichage et de maintenance.

12. Unité d'éclairage selon la revendication 10 ou la revendication 11, dans laquelle, avec le diffuseur (602) et le couvercle dans la position d'affichage, la structure de support supporte ledit diffuseur et ledit couvercle selon une inclinaison.

13. Unité d'éclairage selon l'une quelconque des revendications précédentes, comprise dans un présentoir (50) permettant de présenter des produits, ledit présentoir comprenant :
une plate-forme sensiblement horizontale ; dans laquelle
ladite unité d'éclairage est au moins partiellement en surplomb par rapport à la section avant de la plate-forme sensiblement horizontale.
